# DEMANDE DE BREVET EUROPEEN

(11) **EP 0 534 875 A1**
(43) Date de publication de la demande: **31.03.1993**
(21) Numéro de dépôt: 92420328.4
(22) Date de dépôt: 25.09.1992
(51) Int. Cl.: B23Q 1/18, F16C 29/00

(54) **Module de guidage pour effectuer une translation linéaire**

(30) Priorité: 27.09.1991 FR 9112274
(71) Demandeur: KINETIC TECHNOLOGIES (S.A.), F-42000 Saint-Etienne (FR)
(72) Inventeur: Coron, Jean Paul, F-69440 Saint Maurice sur Dargeoire (FR)
(74) Mandataire: Dupuis, François

(57) **Abrégé**

Le module est remarquable en ce que le corps (1) monobloc comprend trois groupes d'alvéoles (A-B-C) profilées et adjacentes établies sur toute la longueur du corps, deux groupes d'alvéoles (A-B) dites "actives" pour recevoir chacune un ensemble constitué d'un chariot (2) et trainard (3) associés, l'un de ces ensembles comprenant un axe de guidage (4) et des moyens d'entrainement (5), chacun des ensembles chariot-trainard étant monté sur un rail de guidage (6-7) disposé dans le fond des alvéoles (A-B), les trainards (2-3) étant associés à leur partie supérieure pour recevoir une table (15) de liaison et support de charges, et en ce que, entre lesdites alvéoles (A-B), est réalisé un ensemble d'alvéoles (C) intermédiaires se situant dans la partie centrale médiane et longitudinale du module et étant susceptible de constituer de par son profil un moyen d'augmentation de l'inertie du module en faisant raidisseur et, d'autre part, permettre l'agencement intérieur, positionnement et fixation d'éléments de détection et de contrôle de fonctionnement du module et tous moyens de câble ou conduit assurant la commande du module

## Description

L'invention se rattache au secteur technique des moyens de manutention et de déplacement en ligne de pièces trouvant des applications dans les automatismes et en particulier pour les machines, machines-outils, centres d'usinage à commande numérique, robots industriels et tous systèmes d'alimentation automatiques, appareils de mesure, manipulateurs.

Le concept de module linéaire, de transfert et de manutention, est connu depuis de très nombreuses années et est largement exploité, notamment dans les secteurs techniques précités. Il s'agit en général d'éléments prêts à monter qui sont fixés sur un plan d'appui par leur partie basse inférieure et qui sont agencés avec une structure profilée autorisant un déplacement alternatif en va et vient selon un cycle déterminé d'un chariot sur lequel est fixée une ou des pièces ou outils ou autres, susceptible de fonctionner et d'intervenir selon un cycle préétabli dans un mouvement de va et vient continu.

La structure précitée du module est obtenue par une forme profilée en aluminium obtenue par filière et présentant intérieurement un espace pour le guidage et déplacement du chariot transfert. On utilise des systèmes de guidage et d'entraînement du type vis à billes, galets et autres, ou courroie crantée, ou vérins.

Le module linéaire est agencé ainsi avec un corps de grande longueur à l'intérieur duquel se déplace un traînard dont la partie supérieure est agencée pour recevoir des pièces et/ou accessoires, tandis que la partie inférieure est associée en étant posée et fixée sur une surface plan rectiligne d'un chariot assurant sa translation.

Pour assurer une protection du module linéaire et en particulier de ses mécanismes intérieurs relatifs à son déplacement , il est utilisé des bandes de protection, des soufflets, ou par exemple un dispositif d'étanchéité tel que défini dans la Demande de Brevet français N° 90.03984 au nom du Demandeur.

Des modules linéaires de guidage de ce type ont été par exemple décrits également dans la Demande de Brevet français N° 90.03985 au nom du Demandeur, ainsi que dans le Brevet allemand N° 3.815.595, appartenant à l'art antérieur.

De tels modules linéaires sont exploités avec fiabilité.

Dans le cadre de ses recherches, le Demandeur a voulu encore améliorer les conditions d'utilisation desdits modules et améliorer en particulier leur tenue par rapport aux différents efforts de charges, et en particulier de charges radiales, inhérents à leur utilisation, ainsi que les conditions de présentation extérieure desdits modules en égard des accessoires complémentaires utilisés et inhérents à leur fonctionnement, tels que câbles, limiteurs de course et autres.

Ainsi, selon une première caractéristique de l'invention, le module linéaire de guidage pour la translation et la manutention de toutes pièces et accessoires du type comprenant un corps en aluminium de grande longueur agencé et profilé intérieurement pour recevoir dans sa face de fond un rail de guidage autorisant le positionnement d'un ensemble chariot-trainard, ledit trainard étant monté guidé longitudinalement sur un axe de guidage disposé entre les extrémités formant flasques du module, la partie supérieure profilée du trainard débordant extérieurement du module, des moyens d'étanchéité étant disposés dans la partie supérieure du module pour couvrir la fente de passage du trainard, des moyens d'entrainement de l'ensemble trainard-chariot étant disposés à l'intérieur du module, caractérisé en ce que le corps monobloc comprend trois groupes d'alvéoles profilées et adjacentes établies sur toute la longueur du corps, deux groupes d'alvéoles dites "actives" pour recevoir chacune un ensemble constitué d'un chariot et trainard associés, l'un de ces ensembles comprenant un axe de guidage et des moyens d'entraînement, chacun des ensembles chariot-trainard étant monté sur un rail de guidage disposé dans le fond des alvéoles, les trainards étant associés à leur partie supérieure pour recevoir une table de liaison et suppport de chariot, et en ce que, entre lesdites alvéoles, est réalisé un ensemble d'alvéoles intermédiaires se situant dans la partie centrale médiane et longitudinale du module et étant susceptible de constituer de par son profil un moyen d'augmentation de l'inertie du module en faisant raidisseur et, d'autre part, pour permettre l'agencement intérieur, positionnement et fixation d'éléments de détection et de contrôle de fonctionnement du module et tous moyens de câble ou conduit assurant la commande du module.

Ces caractéristiques et d'autres encore ressortiront bien de la suite de la description.

Pour fixer l'objet de l'invention illustré non limitativement aux figures des dessins où :

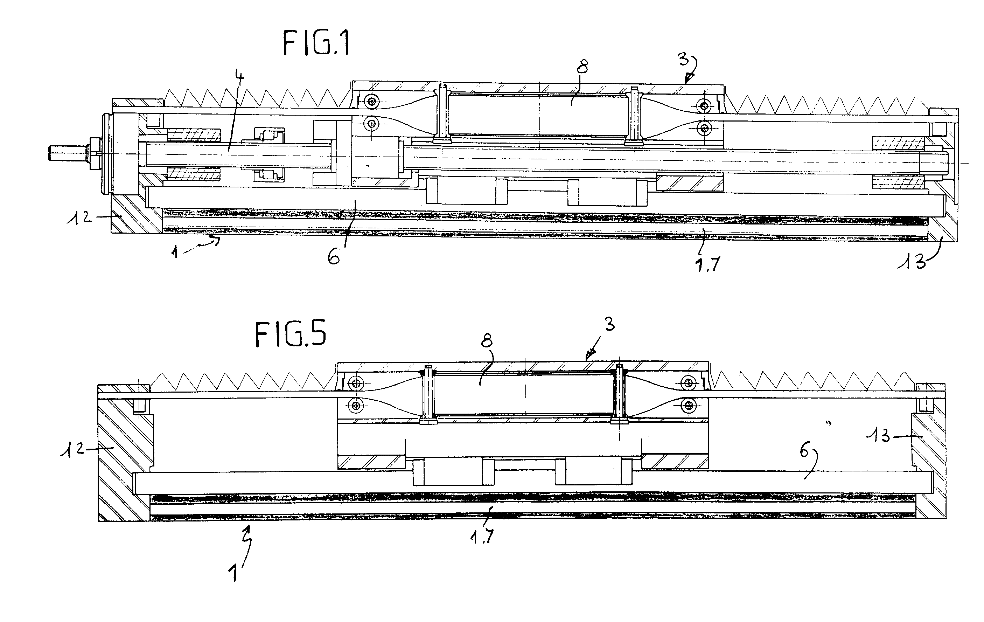

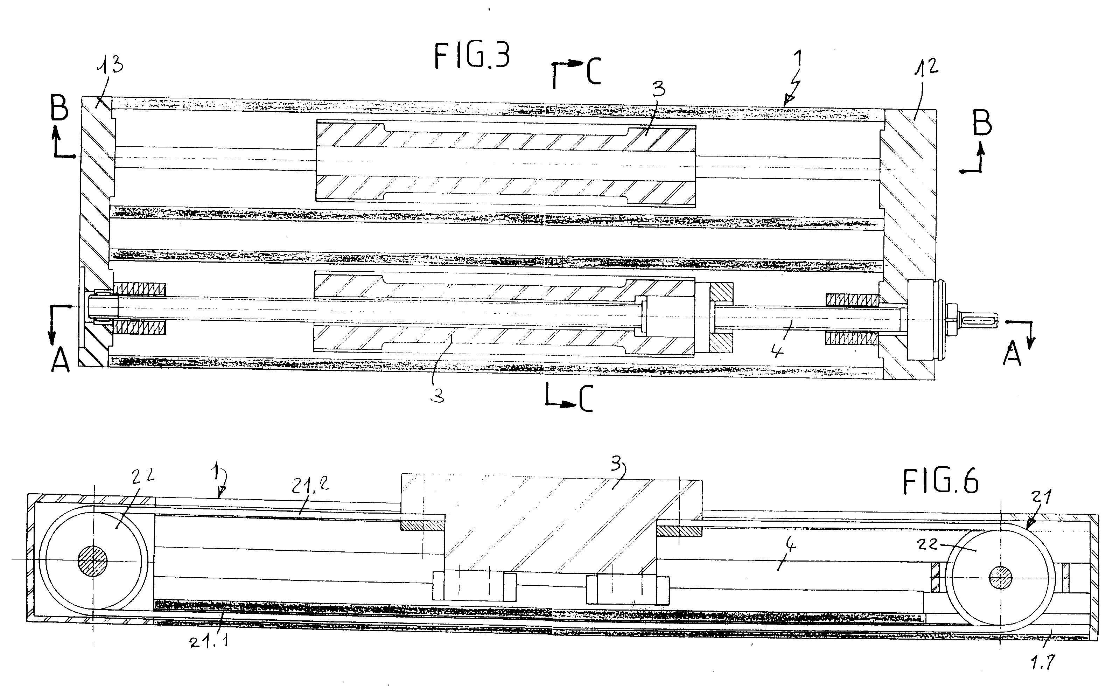

La figure 1 est une vue de côté en coupe d'un module de guidage selon l'invention, établi en coupe A-A selon la figure 3.

La figure 2 est une vue en coupe transversale selon la ligne C-C de la figure 3.

La figure 3 est une vue en coupe longitudinale selon la ligne E-E de la figure 2.

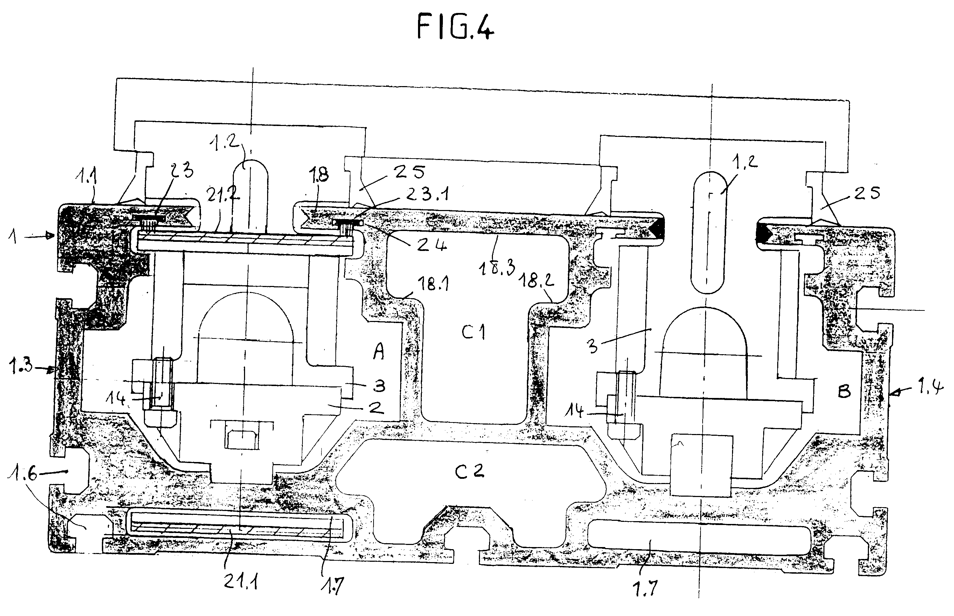

La figure 4 est une vue en coupe selon la figure 2 en variante illustrant les moyens d'entraînement des mécanismes.

La figure 5 est une vue en coupe selon la ligne B-B de la figure 3.

La figure 6 est une vue en coupe longitudinale montrant les mécanismes d'entraînement à l'intérieur du module.

Afin de rendre plus concret l'objet de l'invention, on le décrit maintenant d'une manière non limitative aux figures des dessins.

Le module linéaire de guidage, selon l'invention. est remarquable en ce que, de par sa conception nouvelle, il offre et assure des fonctions conférant, une plus grande inertie par rapport aux modules antérieurs pour permettre de répondre à des sollicitations de charges plus importantes, et également et étant agencé pour permettre une protection améliorée de certains des moyens servant à son fonctionnement, tels que butées de fin de course, moyens de contrôle et de détection, capteurs, câblages divers et de tous usages.

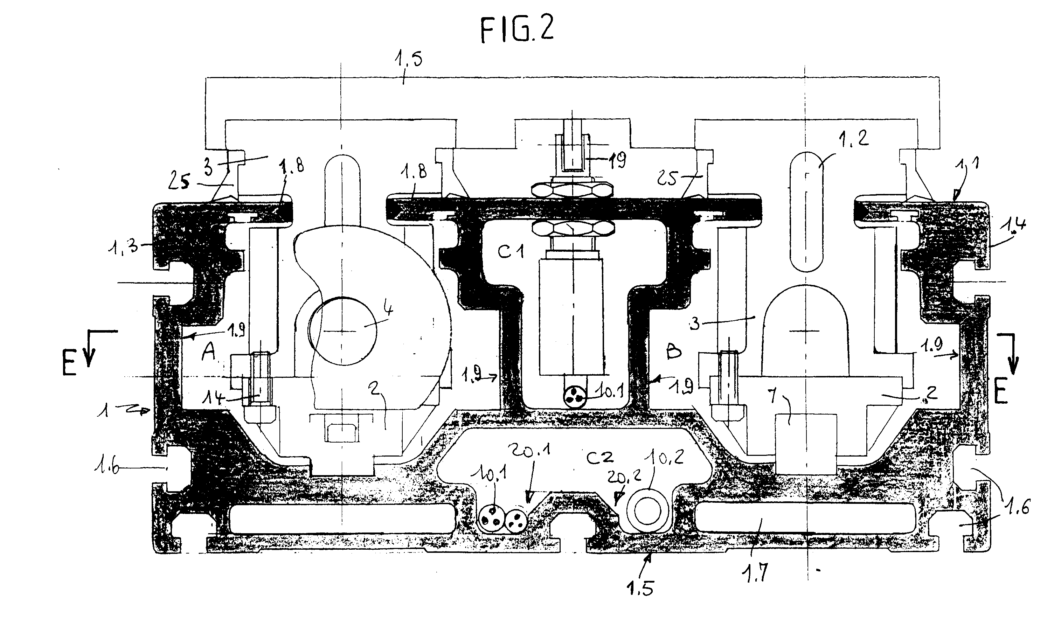

Ainsi, en se référant aux dessins et en particulier figure 2, le module linéaire selon l'invention comprend un corps (1) réalisé en aluminium et obtenu par filage, ce corps présentant la caractéristique de comprendre trois groupes d'alvéoles (A, B, C) profilées et adjacentes établies sur toute la longueur du corps, deux groupes d'alvéoles (A, B) étant dénommées "actives" pour recevoir chacune un ensemble constitué d'un chariot et traînard associes (2, 3), l'un au moins comprenant un axe de guidage (4) et des moyens d'entraînement (5) appropriés, lesdits chariots se déplaçant chacun sur un rail de guidage (6, 7) disposé dans le fond de chacune des alvéoles (A, B). Entre ces alvéoles (A, B) selon l'invention, est prévu un ensemble d'alvéoles (C) disposées intermédiaires entre les précédentes et se situant ainsi dans la partie centrale médiane et longitudinale du module de guidage. Cet ensemble d'alvéoles (C) comprend et est constitué lui-même de une ou de deux alvéoles ou compartiments (C1 - C2) telles que représentées aux dessins, ou plus ; la ou les alvéoles (C1 - C2) intermédiaires sont susceptibles de constituer, d'une part, de par leur profil, un moyen d'augmentation de l'inertie de l'ensemble du module et, d'autre part, de permettre l'agencement intérieur, positionnement et fixation d'éléments de détection et de contrôle du fonctionnement du module, tels que butée de fin de course (19), ainsi que tous moyens de câblage électriques ou autres (10.1) ou autre conduit (10.2) assurant la commande pneumatique ou autre du module.

Plus spécifiquement, en se référant aux dessins, on décrit succinctement les caractéristiques principales communes du module linéaire de guidage selon l'invention avec celles décrites dans la Demande de Brevet français N° 90.03985 du Demandeur à titre non limitatif.

Le corps (1) présente sur sa face supérieure (1.1) une fente horizontale (1.2) ou ouverture autorisant le positionnement d'une bande d'étanchéité et de protection (8) et le passage de la partie supérieure du trainard (3) susceptible de recevoir des,pièces ou accessoires. Le corps (1) présente sur ses côtés latéraux (1.3 - 1.4) et sa face de fond rectiligne (1.5) des échancrures profilées (1.6) autorisant le positionnement de moyens de bridage et de fixation par rapport à un plan d'appui. Il présente dans sa base inférieure des ouvertures d'allègement (1.7) Dans sa partie médiane, la base inférieure du corps présente sur toute sa longueur une ouverture longitudinale dans laquelle est disposée une ouverture de liaison (11). La partie supérieure du corps présente par exemple des bords (1.8) formant un rabat définissant une fente réduite de passage et de positionnement d'une bande de protection (8) établie de toute manière appropriée telle que par exemple selon les dispositions décrites dans le Brevet FR 90.03984. Les extrémités latérales du corps sont agencées avec des flasques avant et arrière (12 - 13) qui sont fixés au corps par tous moyens appropriés, les flasques servant de moyen de guidage et de rotation de l'axe de guidage (4).

Ainsi, selon l'invention, le module linéaire de guidage comprend un corps monobloc (1) de grande longueur permettant de définir longitudinalement trois alvéoles (A, B, C) profilées adjacentes et parallèles. Les alvéoles (A - B) profilées intérieurement reçoivent chacune un ensemble chariot (2) - trainard (3) dûment solidaires entre eux de manière démontable ou non par tous moyens (14). Les chariots dans leur partie inférieure viennent s'adapter et chevaucher le rail de guidage inférieur (6 - 7) en regard. Les trainards (3) profilés débordant de la partie supérieure du corps du module sont accouplés entre eux à l'aide d'une table ou plateau (15) de grande dimension, et de toute forme appropriée pour constituer une large assise des appareils et accessoires à supporter. De par cette conception et cet élargissement de la table support, la charge peut être importante. Les alvéoles (A - B) du module sont agencées intérieuremnt avec des évidements verticaux (1.9) pour permettre le positionnement de moyens de guidage et de roulement type galets tels qu'indiqués dans le Brevet français N° 90.03985, permettant le déplacement des mécanismes.

Selon l'invention, le module de guidage permet un entraînement commandé par l'actionnement d'un seul ensemble trainard-chariot monté sur un axe de guidage (4) dans l'alvéole (A) par exemple, l'entraînement de l'autre ensemble chariot-trainard dans l'alvéole (B) s'effectuant de par la liaison des trainards entre eux par la table (15) précitée. Il n'est donc pas nécessaire d'avoir un second axe de guidage (4) dans l'alvéole (B).

Ainsi qu'il apparaît en particulier figure 2 des dessins, les parois (16 - 17) intérieures des alvéoles (A, B) délimitent de par leur épaisseur et profil, la forme et volume de l'alvéole (C) ou groupe d'alvéoles, intermédiaire et centrale. Ces parois contribuent à augmenter la rigidité et l'inertie du module linéaire. L'alvéole intermédiaire (C) peut être unique ou être agencée avec deux ou plusieurs compartiments (C1 - C2) profilés. Ainsi, dans une mise en oeuvre de l'invention illustrée figure 2, l'alvéole ou compartiment (C1) supérieure est profilée et permet sur ses parois latérales internes (18.1 - 18.2) l'adjonction et fixation par tous moyens appropriés d'éléments de commande ou de détection. La paroi supérieure (18.3) est elle aussi avantageusement agencée pour recevoir près des extrémités du module un ou deux moyens limiteurs de fin de course (19) formant butées et susceptibles de coopérer avec des moyens complémentaires établis sur la table (15) ou la table elle-même. Aussi, la paroi (18.3) est aménagée avec des ouvertures de fixation des limiteurs de fin de course. Ces dits moyens (19) sont ainsi convenablement protégés à l'intérieur du module sans risque de disfonctionnement ou de perturbation inhérent à des contraintes d'utilisation dans un environnement extérieur au module linéaire.

Par ailleurs, l'alvéole intermédiaire (C) ou l'ensemble, peut être agencée avec une alvéole inférieure ou compartiment (C2) profilée pour contribuer à l'augmentation de la rigidité et inertie de l'ensemble pour recevoir des câbles électriques (10.1 de commande, des conduites (10.2) de transfert de fluides et autres. L'alvéole inférieure (C2) peut être ainsi profilée dans sa partie basse avec les formes évidées (20.1 - 20.2) pour séparer les câbles et autres conduits selon leur nature.

Ainsi, le module linéaire de guidage selon l'invention répond et résout un double problème en assurant une fonction d'augmentation de son inertie en permettant le travail de charges plus important, tout en assurant dans une seconde fonction la protection des moyens complémentaires assurant le fonctionnement et la commande du module.

A titre complémentaire, ainsi qu'il apparaît figure 5, l'entraînement d'un des ensembles trainard-chariot peut s'effectuer par une courroie (21) continue montée entre des galets de renvoi (22) disposés aux extrémités de l'alvéole (A). La dite courroie est introduite par son brin inférieur (21.1) dans la partie inférieure du corps du module dans l'une des ouvertures d'allègement (1.7) profilée alors de forme oblongue ou rectangulaire pour permettre son passage. Le bord supérieur (21.2) de la courroie est associée et accouplée aux formes du trainard dans la partie sousjacente aux rabats (1.8), tandis que des brosses (23) fixées à ces derniers par des pattes supports (23.1) présentant des évidements profilés (24) ou autres formés sous les rabats (1.8) garantissent une étanchéité de l'intérieur des alvéoles (A - B). D'autres bandes ou joints d'étanchéité (25) associés à la table ou plateau (15) complètent la protection.

La bande d'étanchéité (8) supérieure du module linéaire peut être du type décrit dans le Brevet français N° 90.03984, le trainard étant alors aménagé avec une fente (3.1) longitudinale verticale, ou être à soufflet ou autres.

Les avantages selon l'invention sont nombreux à savoir : Le module linéaire ainsi congru forme poutre offrant une grande inertie en flexion. Son prix de revient est réduit car comparativement à deux modules linéaires de guidage indépendants tels que décrit et existant selon l'art antérieur, on supprime notamment l'utilisation d'un axe de guidage du second ensemble chariot-trainard et de pièces annexes de montage nécessaires.

Le module selon l'invention permet d'augmenter la force de retenue et accepter des couples de renversement au niveau de la charge radiale plus important.

Par ailleurs, les surfaces de guidage des deux ensembles chariots-trainards sont rigoureusement dans le même plan géométrique de par la fabrication monobloc du module. Il n'est plus nécessaire de procéder à des assemblages hétéroclites de deux modules linéaires de l'art antérieur pour tenter d'augmenter les surfaces portantes entraînant des agencements par boulonnage peu pratiques et peu surs.

Un autre avantage important réside dans l'utilisation des parois complémentaires de jonction des alvéoles entre elles qui assurent une fonction de raidisseur améliorant considérablement la tenue et l'inertie du module. La forme et le profil des parois des alvéoles peuvent être ainsi déterminés en fonction des cas d'application des modules linéaires.

Un autre avantage réside enfin dans la protection totale d'un ensemble moyen et accessoires, tels que limiteurs de fin de course, capteurs, moyens de contrôle et de mesure en général, câbles et autres qui étaient toujours disposés extérieurement sur les parois apparentes des modules et pouvant être au contact de tout environnement extérieur inapproprié.

## Revendications

**-1-** Module linéaire de guidage pour la translation et la manutention de toutes pièces et accessoires du type comprenant un corps (1) en aluminium de grande longueur agencé et profilé intérieurement pour recevoir dans sa face de fond (1.5) un rail de guidage (6) autorisant le positionnement d'un ensemble chariot (2) - trainard (3), ledit trainard étant monté guidé longitudinalement sur un axe de guidage (4) disposé entre les extrémités formant flasques du module, la partie supérieure profilée du trainard débordant extérieurement du module, des moyens d'étanchéité (8) étant disposés dans la partie supérieure du module pour couvrir la fente (1.2) de passage du trainard, des moyens d'entraînement de l'ensemble trainard-chariot étant disposés à l'intérieur du module, caractérisé en ce que le corps (1) monobloc comprend trois groupes d'alvéoles (A - B - C) profilées et adjacentes établies sur toute la longueur du corps, deux groupes d'alvéoles (A - B) dites "actives" pour recevoir chacune un ensemble constitué d'un chariot (2) et trainard (3) associés, l'un de ces ensembles comprenant un axe de guidage (4) et des moyens d'entraînement (5), chacun des ensembles chariot-trainard étant monté sur un rail de guidage (6 - 7) dispose dans le fond des alvéoles (A - B), les trainards (2 - 3) étant associes à leur partie supérieure pour recevoir une table (15) de liaison et support de charges, et en ce que, entre lesdites alvéoles (A - B), est réalisé un ensemble d'alvéoles (C) intermédiaires se situant dans la partie centrale médiane et longitudinale du module et étant susceptible de constituer de par son profil un moyen d'augmentation de l'inertie du module en faisant raidisseur et, d'autre part, permettre l'agencement intérieur, positionnement et fixation d'éléments de détection et de contrôle de fonctionnement du module et tous moyens de câble ou conduit assurant la commande du module.

**-2-**Module linéaire de guidage selon la revendication 1, caractérisé en ce que l'ensemble d'alvéoles (C) comprend et est constitué lui-même de une ou de plusieurs alvéoles ou compartiments (C1 - C2) susceptibles de recevoir des moyens de contrôle et de détection, des moyens limiteurs de course et des câbles ou conduits de toute nature, les parois (16 - 17) intérieures des alvéoles (A - B) délimitant de par leur profil et épaisseur la forme et le volume de l'alvéole (C) ou groupe d'alvéoles (C1 - C2).

**-3-** Module linéaire de guidage selon la revendication 2, caractérisé en ce que l'alvéole ou compartiment (C1) supérieure est profilée et permet sur ses parois latérales internes (18.1 - 18.2), l'adjonction et la fixation d'éléments de commande et de détection, la paroi supérieure (18.3) étant agencée pour recevoir près des extrémités du module un ou des moyens limiteurs de course (19) susceptibles de coopérer avec des moyens complémentaires établis sur la table (15) ou la table elle-même.

**-4-** Module linéaire de guidage selon l'une quelconque des revendications 2 et 3, caractérisé en ce que l'alvéole intermédiaire (C) est agencée avec une alvéole inférieure ou compartiment (C2) susceptibles de recevoir dans des formes évidées (20.1 - 20.2) des câbles électriques (10.1) ou autres conduits (10.2).

**-5-** Module linéaire de guidage selon la revendication 1, caractérisé en ce que l'entraînement d'un des ensembles trainard-chariot est réalisé par une courroie (21) continue montée entre des galets de renvoi (22) disposée aux extrémités de l'alvéole (A), ladite courroie étant introduite par son brin inférieur (21.1) dans la partie inférieure du corps du module dans une ouverture d'allègement (1.7), tandis que le bord supérieur (21.2) de la courroie est associé et accouplé aux formes du trainard dans la partie sousjacente au bord supérieur du corps du module.

**-6-** Module linéaire de guidage selon la revendication 5, caractérisé en ce que des brosses (23) sont fixées dans la partie sousjacente inférieure du corps du module et viennent en appui sur la face en regard de la course d'entraînement.
